# EUROPÄISCHE PATENTSCHRIFT

(11) **EP 1 631 494 B1**
(45) Veröffentlichungstag und Bekanntmachung des Hinweises auf die Patenterteilung: **10.10.2007**
(21) Anmeldenummer: 04734818.0
(22) Anmeldetag: 26.05.2004
(51) Int. Cl.: B64F 1/36

(54) **VERFAHREN ZUM UNTERSTÜTZEN DES LANDENS UND/ODER DES STARTENS EINES EINEN ANTRIEB AUFWEISENDEN FLUGOBJEKTS**
METHOD FOR SUPPORTING A PROPELLED FLYING OBJECT DURING TAKE-OFF AND/OR LANDING
PROCEDE D'ASSISTANCE AU DECOLLAGE ET/OU A L'ATTERRISSAGE D'UN AERONEF POURVU D'UN MOTEUR

(30) Priorität: 06.06.2003 DE 10326144; 18.06.2003 DE 10327743; 23.06.2003 DE 10328292
(43) Veröffentlichungstag der Anmeldung: 08.03.2006
(73) Patentinhaber: Wolter, Klaus, 40625 Düsseldorf (DE)
(72) Erfinder: Wolter, Klaus, 40625 Düsseldorf (DE)
(74) Vertreter: Cohausz & Florack
(86) Internationale Anmeldenummer: PCT/EP2004/005642
(87) Internationale Veröffentlichungsnummer: WO 2004/108530

(56) Entgegenhaltungen:
- EP-A- 0 579 508
- GB-A- 343 763
- US-A- 1 709 058
- US-A- 4 700 912

## Beschreibung

Die Erfindung betrifft ein Verfahren und eine Vorrichtung zum Unterstützen des Landens und/oder des Startens eines einen Antrieb aufweisenden Flugobjekts.

Mit Flugobjekt wird hier ein beliebiges Objekt bezeichnet, das geeignet ist, sich mittels eines eigenen Antriebs in der Atmosphäre eines Planeten ohne Kontakt zum Boden zu bewegen, wie beispielsweise ein Flugzeug.

Eine besondere Herausforderung sowohl bei der Konstruktion als auch bei der Nutzung von solchen Flugobjekten stellt der Start- und der Landevorgang dar.

Für das Starten und Landen eines Flugobjekts werden in der Regel lange Start- und Landebahnen benötigt. Die Bereitstellung von langen Start- und Landebahnen ist jedoch zeit- und kostenintensiv. Hinzu kommt, dass nicht an jedem Ort ausreichend Platz für reguläre Start- und Landebahnen zur Verfügung steht. Dies ist insbesondere auf seegestützten Landeeinheiten der Fall, kann aber auch sonst, etwa in bergigem Gelände, ein Problem darstellen. Hier ist eventuell eine Unterstützung eines Landevorgangs auf einer kurzen Landebahn mittels Fangseilen erforderlich, wofür ein besonders genauer Zielanflug nötig ist. Ein solches Verfahren bedeutet einen hohen Schulungsaufwand für die Besatzung.

Zur Unterstützung der Landung eines Flugzeugs wird in der Druckschrift EP 0 579 508 A1 vorgeschlagen, diesem bei der Landung einen Gegenwind entgegenzurichten. Bei geeigneter Wahl des Durchmessers und der Geschwindigkeit eines Luftstroms kann das Flugzeug relativ zu einer Landefläche so abgebremst werden, dass es sich bei Ankunft an der Landefläche in einem "Schwebezustand" befindet.

Der Erfindung liegt die Aufgabe zugrunde, ein Verfahren und eine Vorrichtung bereitzustellen, die den Startund/der Landevorgang eines einen Antrieb aufweisenden Flugobjekts weitergehend unterstützen.

Die Aufgabe wird zum einen gelöst durch ein Verfahren, in dem ein, bezogen auf eine Lande- bzw. Startfläche, stationär erzeugter Fluidstrom zum Einbringen von Energie in das Flugobjekt bereitgestellt wird. Die Dichte des Fluidstroms wird dabei situationsbezogen eingestellt.

Zum anderen wird die Aufgabe gelöst durch eine Vorrichtung, die mindestens einen, bezogen auf eine Lande- bzw. Startfläche, stationären Fluidstromgenerator aufweist, der dazu ausgebildet ist, einen Fluidstrom zum Einbringen von Energie in ein Flugobjekt bereitzustellen. Der Fluidstromgenerator ist dabei dazu ausgebildet, die Dichte des Fluidstroms zu variieren.

Die Erfindung basiert auf der Überlegung, dass auch ohne den Einsatz von mechanischen Hilfsmitteln die Energie für die positive oder negative Beschleunigung eines Flugobjekts zum Starten oder Landen nicht alleine von dem Flugobjekt aufgebracht werden muss. Vielmehr kann ein auf das Flugobjekt gerichteter Fluidstrom mit einstellbarer Dichte ein Abbremsen oder ein Beschleunigen des Flugobjekts unterstützen.

Es ist ein Vorteil der Erfindung, dass sie universell und flexibel einsetzbar ist. Sie ermöglicht eine einfach zu handhabende Unterstützung des Startens und Landens eines Flugobjekts ohne die Notwendigkeit einer langen Start- und Landebahn. Es ist ferner ein Vorteil der Erfindung, dass sie unabhängig von der Art des Landeorts, von der Witterung, und von der Art des Flugobjekts ist. Das erfindungsgemäße System kann dabei auf einfache Weise, kostengünstig und innerhalb kurzer Zeit realisiert werden.

Auch die Flugobjekte, deren Starten und/oder Landen erfindungsgemäß unterstützt wird, können besonders einfach ausgestaltet werden, da sie nicht unbedingt eigenständig starten und/oder landen können müssen. Sind bestimmte, für die Landung genutzte Komponenten, wie beispielsweise Räder, nicht erforderlich, so erhöht dies auch die Sicherheit, da eine Fehleranfälligkeit dieser Komponenten nicht mehr relevant ist.

Weist der bereitgestellte Fluidstrom darüber hinaus erfindungsgemäß eine einstellbare spezifische Dichte auf, so kann die Effektivität des Fluidstroms, d.h. seine Bremswirkkung bzw. seine Beschleunigungswirkung, erhöht werden, indem er mit mindestens einem Stoff höherer spezifischer Dichte angereichert wird.

Vorteilhafte Ausgestaltungen der Erfindung ergeben sich aus den Unteransprüchen.

In einer vorteilhaften Ausgestaltung der Erfindung ist die Richtung des Fluidstroms situationsabhängig einstellbar. Die Richtung umfasst dabei auch den Winkel gegenüber der Start- und/oder Landefläche. Die Situation kann dabei beispielsweise durch die Anflugrichtung, die Höhe und/oder die Entfernung des Flugobjekts bestimmt sein. Werden mehrere separate Fluidströme eingesetzt, so ist deren Richtung vorteilhafterweise individuell einstellbar.

In einer weiteren vorteilhaften Ausgestaltung der Erfindung ist mindestens ein weiterer physikalischer Parameter des Fluidstroms situationsbezogen einstellbar. Ein solcher physikalischer Parameter kann dabei zum Beispiel die Temperatur des Fluidstroms, die Geschwindigkeit des Fluidstroms, die Homogenität des Fluidstroms oder der Laminaritätsanteil des Fluidstroms sein. Die Situation kann dabei beispielsweise durch die Umgebungstemperatur, die Geschwindigkeit des Flugobjekts, den Typ des Flugobjekts, die Entfernung des Flugobjekts usw. bestimmt sein.

Die Einstellung der Temperatur kann über Heizelemente und/oder Kühlelemente erfolgen. Mit einer erhöhten Temperatur des Fluidstroms kann beispielsweise eine Nebelbildung vermieden werden oder auch eine Vereisung des Flugobjekt vermieden oder bekämpft werden. Mit einer Reduzierung der Temperatur des Fluidstroms kann beispielsweise eine Überhitzung des Flugobjekts verhindert werden.

Ebenso kann in den bereitgestellten Fluidstrom bei Bedarf ein Löschmittel eingebracht werden, etwa um einen Brand an einem Flugobjekt bereits im Anflug zu bekämpfen.

Der bereitgestellte Fluidstrom kann beispielsweise ein aus der vorhandenen Atmosphäre künstlich erzeugter Wind, ein Materiestrom oder ein Massestrom sein. Der zur Erzeugung des Fluidstroms eingesetzte Fluidstromgenerator kann ein aus der Praxis bekannter Fluidstromgenerator sein, beispielsweise ein Gebläse wie ein konventionell für Flugzeuge eingesetztes Mantelstromtriebwerk. Werden bereits zur Verfügung stehende Fluidstromgeneratoren eingesetzt, so lässt sich das erfindungsgemäße System besonders schnell realisieren.

Zum Unterstützen des Landens eines Flugobjekts wird in eine Ausführungsform der Erfindung zunächst ein Fluidstrom bereitgestellt, der geeignet ist, das Flugobjekt abzubremsen. Anschließend wird der Fluidstrom so gesteuert, dass das Flugobjekt aus einem schwebenden Zustand auf eine Landefläche abgesenkt wird.

Zum Unterstützen des Startens eines Flugobjekts wird in eine Ausführungsform der Erfindung zunächst ein Fluidstrom bereitgestellt, der geeignet ist, das Flugobjekt von einer Startfläche aus in einen Schwebezustand zu versetzen. Anschließend wird ein Fluidstrom bereitgestellt, der geeignet ist, das Flugobjekt in eine gewünschte Richtung zu beschleunigen.

In einer weiteren Ausführungsform der Erfindung zum Unterstützen des Startens eines Flugobjekts beschleunigt das Flugobjekt zunächst selber in herkömmlicher Weise. Der eigentliche Start, d.h. das Abheben vom Boden, wird dann aber durch das erfindungsgemäße Verfahren bzw. die erfindungsgemäße Vorrichtung unterstützt und somit beschleunigt. In entsprechender Weise kann ein auf herkömmliche Weise gelandetes Flugobjekt kurz nach Auftreffen auf der Landebahn durch das erfindungsgemäße Verfahren bzw. die erfindungsgemäße Vorrichtung unterstützt abgebremst werden. Dadurch wird keine lange Start- oder Landebahn benötigt, sondern nur eine kurze, für die Beschleunigung erforderliche Strecke. Je nach Flugzeugtyp kann diese Strecke 50 bis 100m betragen. Dieser Ansatz hat den Vorteil, dass er sich zur Nachrüstung bestehender Start- und Landebahnen eignet.

Sämtliche Anpassungen des Fluidstroms werden vorteilhafterweise mittels einer Regeleinrichtung automatisch bestimmt und eingestellt.

Ein Verfahren und/oder eine Vorrichtung zur Unterstützung des Start- bzw. Landevorgangs von Objekten, welche geeignet sind sich in der Atmosphäre eines Planeten ohne Kontakt zum Boden zu bewegen (heißt: Kein Teil des Objektes hat Kontakt zum Boden. Es befindet sich mindestens eine Schicht molekularer Dicke der Atmosphäre zwischen Objekten und Boden) (= Flugobjekte, Flugzeuge) zeichnet sich dadurch aus, dass ein solches Objekt beim Start bzw. der Landung in einem in allen physikalischen Parametern (Temperatur, Dichte, Geschwindigkeit, Homogenität, Laminarität) gesteuerten atmosphärischen Strom (= Wind, Materiestrom, Massestrom) erzeugt z. B. durch starke, gegebenenfalls auch schwenk- und in den Raumrichtungen verschiebbar gelagerte Gebläse beschleunigt wird (hier ist die positive wie negative Beschleunigung im Sinne der physikalischen Definition gemeint) und somit gestartet bzw. gelandet wird. Um die Effizienz der Beschleunigung zu steigern, kann der atmosphärische Strom durch anreichern mit Stoffen höherer spezifischer Dichte (z.B. können Wassertropfen eingesprüht werden, andere Anreicherungsmaterialien sind auch denkbar, solange diese den Zweck erfüllen) verstärkt werden.

In einer Ausführung dieses Verfahrens und/oder der Vorrichtung ist für den Fall des Landevorgangs z.B. daran gedacht, das Flugobjekt in einen nicht notwendigerweise gesteuerten Materiestrom hineinfliegen zu lassen, der durch seine Bewegungsenergie in Summe mit der Antriebsenergie des Flugobjektes die Geschwindigkeit des Flugobjektes bzgl. des Bodens auf Null absenkt und durch seine Eigengeschwindigkeit dem Flugobjekt durch anströmen der Auftriebskörper desselben den nötigen Auftrieb zum Schweben gibt. (Weiteres hierzu ist in jedem Lehrbuch der Physik nachzulesen.) Durch Umlenken oder Reduzieren oder allgemeiner Steuern (hier ist die mögliche Änderung aller Parameter der Geometrie (x, y, z, Winkel), wie die Änderung der physikalischen Parameter gemeint) des Materiestromes, wie des Antriebes des Objektes kann nun das Objekt auf dem Boden abgesetzt werden.

Selbiges Verfahren und/oder Vorrichtung kann nun auch in umgekehrter Weise für den Startvorgang genutzt werden. Es lassen sich z. B. Startvorgänge analog, wie beim Seilstart eines Segelflugzeugs darstellen, wobei im Analogieschluss die in Kombination durch das Aufwickeln des Seiles dargestellten Aufgaben, der Beschleunigung des Flugobjektes und die Erzeugung des Gegenwindes, hier durch ein stationäres schwenkbares Gebläse und das Triebwerk des Flugobjektes übernommen werden. Auch hier ist die Beschränkung auf dieses eine Beispiel wie auch im Fall des Landevorgangs viel zu kurz gegriffen, da eine Methode zu Starten insbesondere in Abhängigkeit vom Typ des Flugzeugs zu sehen ist.

Eine weitere bevorzugte Ausführung sei dennoch dargestellt, da sie eine aus der Mannigfachigkeit darstellt, die einer schnellen Realisation, sowie Akzeptanz am nächsten kommen dürfte. In dieser Ausführung wird das/die zuvor beschriebene Verfahren/Vorrichtung partiell eingesetzt: Das Flugobjekt beschleunigt zuerst wie gehabt und wird dann vor Ende des klassischen Vorgangs durch das hier vorgestellte neue Verfahren und/oder Vorrichtung endgültig gestartet. Diese Variation ist in einer Übergangsphase interessant als Nachrüstung für bestehende Flughäfen, für die ein Ausbau einer bestehenden Piste nicht in Frage kommt und die Betreiber eine völlige Umstellung nicht wünschen (z. Zt. interessant für den Ausbau des AIRBUS - Flughafens Hamburg!).

In einer weiteren bevorzugten Ausführung des Verfahrens und/oder Vorrichtung wird durch Steuerung der Temperatur des Materiestroms z. B. die Nebelbildung oder auch die Vereisung der Objekte im Bereich des Aktionsraumes vermieden bzw. aufgehoben oder aber eine Überhitzung reduziert.

Auch kann in einer weiteren Ausführungsform z. B. Löschmittel, wie z.B. Löschschaum in den Materiestrom insbesondere auch punktuell gezielt eingebracht werden.

In einer weiteren bevorzugten Ausführungsform werden alle Steuerungsvorgänge automatisiert und durch übliche Regeleinheiten z.B. auf Computerbasis ausgeführt.

Um ein weiteres anschauliches Beispiel zu geben, sei hier der auf einer Wasserfontäne oder in einem Luftstrom tanzende Ball zitiert. Analog und dies mit allen erdenklichen Fallunterscheidungen und Lösungsmöglichkeiten z.B. bzgl. der Laminarität, oder Homogenität des Materiestroms ist eine bevorzugte Ausführung gestaltet. In einer weiteren bevorzugten Ausführungsform werden als Gebläse große Mantelstromtriebwerke, wie sie in der Verkehrsfliegerei eingesetzt werden, genutzt.

Dies alles führt dazu, dass eine Realisation dieses Verfahrens und/oder der Vorrichtung innerhalb kürzester Zeit möglich ist (nur Monate (!) Entwicklungszeit!)

Das hier vorgestellte Verfahren und/oder die Vorrichtung zur Unterstützung des Start- bzw. Landevorgangs von Flugobjekten ist land- wie seegestützt einsetzbar und dabei vollständig witterungsunabhängig. Ebenso ist es unabhängig von der Ausprägung des/der Flugobjekte.

Unter der Mannigfachigkeit der Vorteile sind außer den vorgenannten noch einige andere hervorzuheben:
· Geringer Schulungsaufwand des fliegenden Personals: Man denke an die unsägliche Methode mittels Fangseilen für die Landung, für die ein genauer Zielanflug nötig ist. Ebenso ist der Startvorgang deutlich einfacher ==> Kosten und Zeitersparnis!
. Modulare Bauweise: See- wie landgestützte Einheiten sind identisch aufbaubar.
. Höchstmögliche Flexibilität und Mobilität: Es wird keine Start- oder Landebahn benötigt nur für den Beschleunigungsvorgang notwendige Raum wird benötigt (je nach Flugzeug kürzer 50m bis 100m), d.h. es entfällt dieser Teil der notwendigen Logistik. Der z.B. militärische Flughafenbau entfällt fast vollständig ==> Kosten und Zeitersparnis!
. Geringerer Konstruktionsaufwand beim Bau von Flugzeugen, d. h. mehr Nutzlast. Also entfällt die Notwendigkeit Senkrechtstarter für den Überschallflug zu bauen. Weniger bewegliche Teile = höhere (technische) Sicherheit. Folge: Weniger hochspezialisiertes Personal geringere technische Anfälligkeit.

Eine Ausgestaltung der Erfindung wird im Folgenden anhand eines Ausführungsbeispiels unter Bezugnahme auf Zeichnungen näher erläutert. Dabei zeigt:
- Fig. 1: eine schematische Darstellung einer Start- und Landeeinheit als Ausführungsbeispiel der erfindungsgemäßen Vorrichtung, und
- Fig. 2: ein Flussdiagram, das den Betrieb der Start- und Landeeinheit aus Figur 1 veranschaulicht.

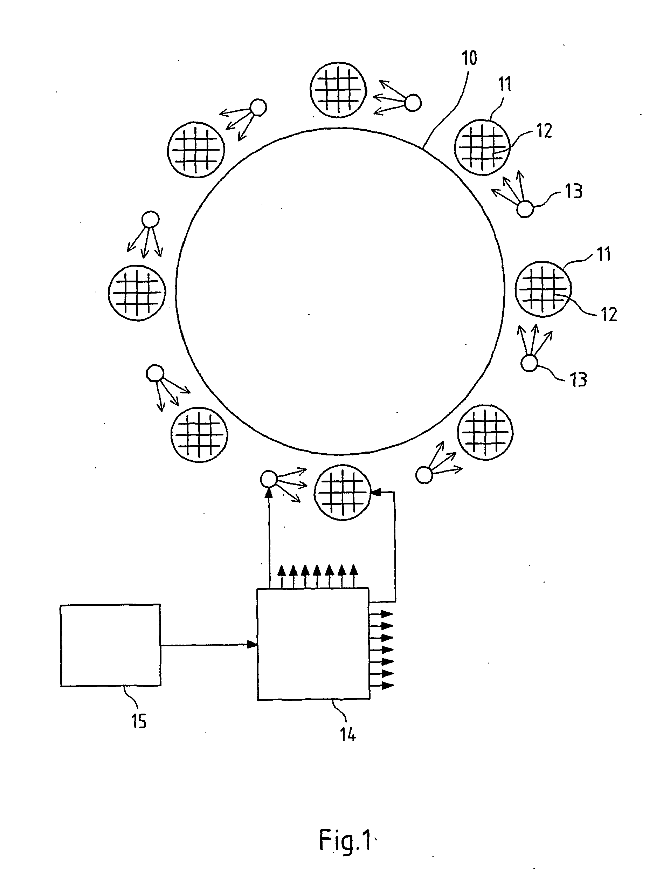

Figur 1 ist eine schematische Darstellung einer Start- und Landeeinheit, die das Starten und Landen eines Flugzeugs erfindungsgemäß unterstützt. Das Flugzeug kann dabei ein Flugzeug herkömmlichen Typs sein.

Die Start- und Landeeinheit weist eine kreisförmige Start- und Landefläche 10 auf. In gleichmäßigen Abständen um die Start- und Landefläche 10 herum sind acht große Mantelstromtriebwerke 11 installiert. Jedes der Mantelstromtriebwerke 11 ist schwenkbar gelagert und weist ein Temperaturregelelement auf. Das Temperaturregelelement umfasst einen gitterförmigen Einsatz 12 im Luftaustrittsbereich des jeweiligen Mantelstromtriebwerks 11, wobei die Temperatur des gitterförmigen Einsatzes 12 einstellbar ist. Jedem der Mantelstromtriebwerke 11 ist außerdem ein Sprühanlage 13 zugeordnet, die Wassertropfen in den Luftaustrittsbereich der Mantelstromtriebwerke 11 sprühen kann.

Die Start- und Landeeinheit weist ferner eine computerbasierte Regeleinrichtung 14 auf. Die Regeleinrichtung 14 ist mit einer Erfassungs- und Empfangseinrichtung 15 verbunden. Diese umfasst Temperatursensoren sowie Empfangsmittel zum Empfangen von Signalen die von sich nähernden Flugzeugen ausgesandt werden. Die Regeleinrichtung 14 hat des weiteren einen steuernden Zugang zu jedem der Mantelstromtriebwerke 11 sowie zu jeder der Sprühanlagen 13. Aus Gründen der Übersichtlichkeit ist dieser Zugang nur beispielhaft für eines der Mantelstromtriebwerke 11 und eine der Sprühanlagen 13 dargestellt.

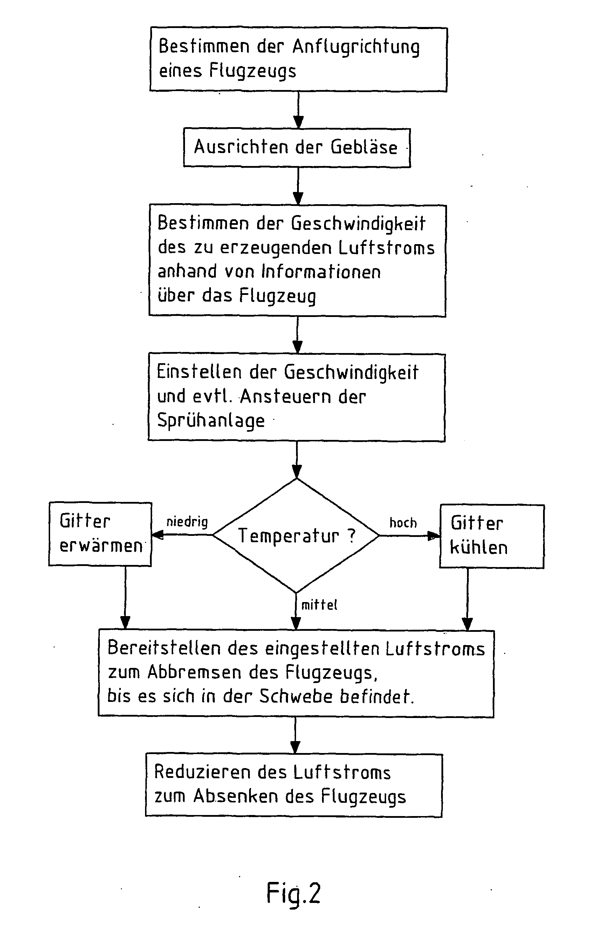

Das Flussdiagram in Figur 2 illustriert die Funktionsweise der Start- und Landeeinheit aus Figur 1.

Befindet sich ein Flugzeug im Anflug zur Landung, so bestimmt die Regeleinrichtung 14 zunächst die Anflugsrichtung des Flugzeugs. Dies kann beispielsweise anhand von Koordinaten erfolgen, die von dem Flugzeug an die Empfangsmittel der Erfassungs- und Empfangseinheit 15 übermittelt werden. Alternativ oder zusätzlich kann die Bestimmung der Anflugsrichtung auch anhand von bodengestützten Vermessungen von Flugparametern erfolgen. Die Regeleinrichtung 14 richtet die schwenkbaren Mantelstromtriebwerke 11 mittels Steuersignalen dann so aus, dass ein zu erzeugender Luftstrom dem Flugzeug entgegen ausgerichtet wird.

Das Flugzeug überträgt außerdem Informationen über das Flugzeug selber, zum Beispiel über dessen Geschwindigkeit, Höhe, Gewicht und Form, die von den Empfangsmitteln der Erfassungs- und Empfangseinheit 15 empfangen werden. Basierend auf diesen Informationen bestimmt die Regeleinrichtung 14 die zum Abbremsen des Flugzeugs erforderliche Geschwindigkeit des zu erzeugenden Luftstroms. Genauer wird die Geschwindigkeit über Steuersignale an die Mantelstromtriebwerke 11 so eingestellt, dass durch die Kombination aus der Antriebsenergie des Flugszeugs und der dieser entgegenwirkenden Bewegungsenergie des Luftstroms die Geschwindigkeit des Flugzeugs auf Null reduziert wird. Falls erforderlich, kann die Effizienz des Luftstroms dabei weiter erhöht werden, indem die Sprühanlagen über Steuersignale der Regeleinrichtung 14 veranlasst wird, Wassertropfen in den zu erzeugenden Luftstrom einzusprühen, um so die Dichte des Stroms zu erhöhen. Bei Bedarf können die Sprühanlagen 13 über Steuersignale der Regeleinrichtung 14 auch veranlasst werden, ein Löschmittel in den zu erzeugenden Luftstrom einzusprühen.

Es versteht sich, dass auch die Bestimmung der erforderlichen Geschwindigkeit des zu erzeugenden Luftstroms alternativ oder zusätzlich anhand von bodengestützten Vermessungen von Flugparametern erfolgen kann.

Des weiteren bestimmt der Temperatursensor der Erfassungs- und Empfangseinheit 15 die Umgebungstemperatur. Bei einer besonders niedrigen Umgebungstemperatur veranlasst die Regeleinrichtung 14 über Steuersignale an die Mantelstromtriebwerke 11 eine Erhitzung der Gitter 12 der Temperaturregelelemente, um eine Vereisung aufgrund von in den Luftstrom eingesprühten Wassertropfen zu verhindern oder um eine bestehende Vereisung des Flugzeugs zu entfernen. Bei einer besonders hohen Umgebungstemperatur veranlasst die Regeleinrichtung 14 über Steuersignale an die Mantelstromtriebwerke 11 eine Kühlung der Gitter 12 der Temperaturregelelemente, um ein Überhitzen des Flugzeugs zu verhindern.

Die Mantelstromtriebwerke 11 stellt nun, eventuell unterstützt durch die Sprühanlagen 13, einen Luftstrom mit den eingestellten Parametern bereit und das Flugzeug fliegt in diesen Luftstrom hinein. Dadurch wird das Flugzeug gebremst und über der Start- und Landefläche 10 zum Schweben gebracht. Hierzu kann die Ausrichtung und andere Parameter des Luftstroms der Mantelstromtriebwerke 11 über eine entsprechende Ansteuerung durch die Regeleinrichtung 14 mit dem Flugzeug mitgeführt werden.

Befindet sich das Flugzeug in dieser Position, bewirkt die Regeleinrichtung 14 durch entsprechende Steuersignale an die Mantelstromtriebwerke 11 eine Reduzierung der Geschwindigkeit des erzeugten Luftstroms, so dass das Flugzeug auf dem Boden abgesetzt wird. Alternativ oder zusätzlich können zum Absenken des Flugzeugs auch andere Parameter des erzeugten Luftstroms mittels Steuersignalen der Regeleinrichtung 14 verändert werden, beispielsweise die Menge an Wasser, die durch die Sprühanlagen 13 in den Luftstrom eingesprüht wird.

Das Starten eines Flugzeugs wird in umgekehrter Reihenfolge wie für das Landen eines Flugzeugs beschrieben unterstützt.

Zum Starten wird das Flugzeug zunächst in eine Startposition zwischen den Mantelstromtriebwerken 11 gebracht. Die Regeleinrichtung 14 führt nun ein vorgegebenes Startprogramm durch, nach dem die Mantelstromtriebwerke 11 zunächst einen Luftstrom erzeugen und bereitstellen, der das Flugzeug in einen Schwebezustand über der Start- und Landebahn bringt. Von diesem Zustand aus wird das Flugzeug mittels der eigenen Triebwerke und zusätzlich durch eine entsprechende Ausrichtung und Verstärkung des von den Mantelstromtriebwerken 11 gelieferten Luftstroms beschleunigt. Die Ausrichtung des Luftstroms hängt dabei von der geplanten Flugrichtung des Flugzeugs ab.

Alternativ können auch einige der Mantelstromtriebwerke 11 eingesetzt werden, um einen dem Flugzeug entgegengerichteten und in seiner Stärke anwachsenden Luftstrom zu erzeugen. Gleichzeitig wird dann die Eigenenergie des Flugzeugs genutzt, um das Flugzeug relativ zu dem ihm entgegenströmenden Luftstrom zu beschleunigen. Die Stärke des Luftstroms und die Eigenenergie werden dabei so aufeinander abgestimmt, dass sich das Flugzeug möglichst wenig von seiner Ausgangsposition fortbewegt. Ist eine ausreichende relative Beschleunigung erreicht, so kann das Flugzeug wie beim konventionellen Startvorgang vom Startplatz 10 abheben. Dieser Ansatz ermöglicht eine erhebliche Verkürzung der Startbahn, die für die Beschleunigung eines mittels eigener Energie startenden Flugzeugs erforderlich ist.

Der Luftstrom wird von der Regeleinrichtung 14 durch Steuersignale an die Mantelstromtriebwerke 11 wie beim Landevorgang mittels der Temperaturregelelemente auf eine gewünschte Temperatur gebracht. Des weiteren kann die Regeleinrichtung 14 zur Verstärkung der Effizienz des Luftstroms die Sprühanlagen 13 wieder veranlassen, Wassertropfen in den erzeugten Luftstrom einzusprühen.

Die beschriebene Ausführungsform stellt nur eine ausgewählte aus einer Vielzahl von möglichen Ausführungsformen des erfindungsgemäßen Verfahrens und der erfindungsgemäßen Vorrichtung dar.

## Patentansprüche

1. Verfahren zum Unterstützen des Landens und/oder des Startens eines einen Antrieb aufweisenden Flugobjekts, wobei das Verfahren das Bereitstellen eines, bezogen auf eine Lande- bzw. Startfläche (10), stationär erzeugten Fluidstroms zum Einbringen von Energie in das Flugobjekt umfasst, **dadurch gekennzeichnet, dass** die Dichte des Fluidstroms situationsbezogen eingestellt wird.

2. Verfahren nach Anspruch 1, **dadurch gekennzeichnet, dass** die Richtung des Fluidstroms situationsbezogen eingestellt wird.

3. Verfahren nach Anspruch 1, **dadurch gekennzeichnet, dass** der Wert mindestens eines weiteren physikalischen Parameters des Fluidstroms situationsbezogen eingestellt wird.

4. Verfahren nach Anspruch 3, **dadurch gekennzeichnet, dass** der mindestens eine physikalische Parameter mindestens einen der folgenden Parametern umfasst: die Temperatur des Fluidstroms, die Geschwindigkeit des Fluidstroms, die Homogenität des Fluidstroms und den Laminaritätsanteil des Fluidstroms.

5. Verfahren nach Anspruch 1, **dadurch gekennzeichnet, dass** der bereitgestellte Fluidstrom eine bestimmte spezifische Dichte aufweist und bei Bedarf durch mindestens einen Stoff höherer spezifischer Dichte angereichert wird.

6. Verfahren nach Anspruch 1, **dadurch gekennzeichnet, dass** in den bereitgestellten Fluidstrom ein Löschmittel eingebracht wird.

7. Verfahren nach Anspruch 1, **dadurch gekennzeichnet, dass** der bereitgestellte Fluidstrom ein aus der vorhandenen Atmosphäre künstlich erzeugter Wind, ein Materiestrom oder ein Massestrom ist.

8. Verfahren nach Anspruch 1, **dadurch gekennzeichnet, dass** zum Unterstützen des Landens eines Flugobjekts zunächst ein Fluidstrom bereitgestellt wird, der geeignet ist, das Flugobjekt abzubremsen, und dass dann ein Fluidstrom bereitgestellt wird, der geeignet ist, das Flugobjekt aus einem schwebenden Zustand auf die Landefläche (10) abzusenken.

9. Verfahren nach Anspruch 1, **dadurch gekennzeichnet, dass** zum Unterstützen des Startens eines Flugobjekts zunächst ein Fluidstrom bereitgestellt wird, der geeignet ist, das Flugobjekt von der Startfläche (10) aus in einen Schwebezustand zu versetzen, und dass dann ein Fluidstrom bereitgestellt wird, der geeignet ist, das Flugobjekt in eine gewünschte Richtung zu beschleunigen.

10. Vorrichtung zum Unterstützen des Landens und/oder des Startens eines einen Antrieb aufweisenden Flugobjekts, umfassend mindestens einen, bezogen auf eine Lande- bzw. Startfläche (10), stationären Fluidstromgenerator (11), der dazu ausgebildet ist, einen Fluidstrom zum Einbringen von Energie in ein Flugobjekt bereitzustellen **dadurch gekennzeichnet, dass** der Fluidstromgenerator ferner dazu ausgebildet ist, die Dichte des bereitgestellten Fluidstroms zu variieren.

11. Vorrichtung nach Anspruch 10, **dadurch gekennzeichnet, dass** der von dem Fluidstromgenerator (11) bereitgestellte Fluidstrom ausrichtbar ist.

12. Vorrichtung nach Anspruch 10, **dadurch gekennzeichnet, dass** der Fluidstromgenerator dazu ausgebildet ist, den Wert mindestens eines weiteren physikalischen Parameters des bereitgestellten Fluidstroms zu variieren.

13. Vorrichtung nach Anspruch 10, **gekennzeichnet durch** ein Heizelement (12) zum Erwärmen des bereitgestellten Fluidstrom.

14. Vorrichtung nach Anspruch 10, **gekennzeichnet durch** ein Kühlelement (12) zum Abkühlen des bereitgestellten Fluidstrom.

15. Vorrichtung nach Anspruch 10, **gekennzeichnet durch** eine Stoffzuführeinheit (13) zum Zuführen eines zusätzlichen Stoffes in einen bereitgestellten Fluidstrom, wobei der zusätzlichen Stoffes eine höhere spezifische Dichte aufweist als der bereitgestellte Fluidstrom.

16. Vorrichtung nach Anspruch 10, **gekennzeichnet durch** eine Löschmittelzuführeinheit (13) zum Zuführen eines Löschmittels in den bereitgestellte Fluidstrom.

17. Vorrichtung nach Anspruch 10, **dadurch gekennzeichnet, dass** der mindestens einen Fluidstromgenerator mindestens ein Gebläse (11) umfasst.

18. Vorrichtung nach Anspruch 16, **dadurch gekennzeichnet, dass** das mindestens eine Gebläse mindestens ein Mantelstromtriebwerk (11) umfasst.

19. Vorrichtung nach Anspruch 10, **dadurch gekennzeichnet, dass** der mindestens einen Fluidstromgenerator (11) dazu ausgebildet ist, als Fluidstrom einen aus der vorhandenen Atmosphäre künstlich erzeugten Wind, einen Materiestrom oder einen Massestrom bereitzustellen.

20. Vorrichtung nach Anspruch 10, **gekennzeichnet durch** eine Regeleinrichtung (14) zum Ermitteln des optimalen Werts mindestens eines Parameters des **durch** den mindestens einen Fluidstromgenerator bereitzustellenden Fluidstroms und zum Einstellen dieses mindestens einen Parameterwerts.

21. Vorrichtung nach Anspruch 20, **dadurch gekennzeichnet, dass** der mindestens eine Parameter mindestens einen der folgenden Parameter umfasst: die Richtung des Fluidstroms, die Temperatur des Fluidstroms, die Dichte des Fluidstroms, die Geschwindigkeit des Fluidstroms, die Homogenität des Fluidstroms und den Laminaritätsanteil des Fluidstroms.

## Claims

1. Method for assisting the landing and/or takeoff of a propelled flying object, said method comprising the provision of a, relative to a landing and/or takeoff area (10), stationary-generated fluid current, in order to introduce energy into the flying object, **characterized in that** the density of the fluid current is adjusted depending on the situation.

2. Method according to Claim 1, **characterized in that** the direction of the fluid current is adjusted depending on the situation.

3. Method according to Claim 1, **characterized in that** the value of at least one further physical parameter of the fluid current is adjusted depending on the situation.

4. Method according to Claim 3, **characterized in that** the at least one physical parameter comprises at least one of the following parameters: temperature of the fluid current, velocity of the fluid current, homogeneity of the fluid current and laminarity rate of the fluid current.

5. Method according to Claim 1, **characterized in that** the fluid current provided has a certain specific density and if necessary is enriched by at least one substance of higher specific density.

6. Method according to Claim 1, **characterized in that** a fire-extinguishing agent is introduced into the fluid current provided.

7. Method according to Claim 1, **characterized in that** the fluid current provided is a wind generated artificially from the existing atmosphere, a matter stream or a mass flow.

8. Method according to Claim 1, **characterized in that** to assist the landing of a flying object firstly a fluid current is provided, which is capable of decelerating the flying object, and then a fluid current is provided, which is capable of lowering the flying object from a hovering position onto the landing area (10).

9. Method according to Claim 1, **characterized in that** to assist the takeoff of a flying object firstly a fluid current is provided, which is capable of lifting the flying object from the takeoff area (10) to a hovering position and then a fluid current is provided, which is capable of accelerating the flying object in a desired direction.

10. Apparatus for assisting the landing and/or takeoff of a propelled flying object, comprising at least one, related to a landing and/or a takeoff area (10), stationary fluid current generator (11), which is designed to provide a fluid current in order to introduce energy into a flying object, **characterized in that** the fluid current generator is further designed to vary the density of the fluid current provided.

11. Apparatus according to Claim 10; **characterized in that** the fluid current provided by the fluid current generator (11) can be adjusted.

12. Apparatus according to Claim 10, **characterized in that** the fluid current generator is designed so as to vary the value of at least one further physical parameter of the fluid current provided.

13. Apparatus according to Claim 10, **characterized by** a heating element (12) for heating up the fluid current provided.

14. Apparatus according to Claim 10, **characterized by** a cooling element (12) for cooling down the fluid current provided.

15. Apparatus according to Claim 10, **characterized by** a substance supply unit (13) for introducing an additional substance into a fluid current provided, wherein the additional substance has a higher specific density than the fluid current provided.

16. Apparatus according to Claim 10, **characterized by** a fire-extinguishing agent supply unit (13) for introducing a fire-extinguishing agent into the fluid current provided.

17. Apparatus according to Claim 10; **characterized in that** the at least one fluid current generator comprises at least one blower (11).

18. Apparatus according to Claim 16, **characterized in that** the at least one blower comprises at least one turbofan (11).

19. Apparatus according to Claim 10, **characterized in that** the at least one fluid current generator (11) is designed so as to provide as fluid current a wind artificially generated from the existing atmosphere, a matter stream or a mass flow.

20. Apparatus according to Claim 10, **characterized by** a control device (14) for determining the optimum value of at least one parameter of the fluid current being provided by the at least one fluid current generator and for adjusting this at least one parameter value.

21. Apparatus according to Claim 19, **characterized in that** the at least one parameter comprises at least one of the following parameters: direction of the fluid current, temperature of the fluid current, density of the fluid current, velocity of the fluid current, homogeneity of the fluid current and laminarity rate of the fluid current.

## Revendications

1. Procédé d'assistance à l'atterrissage et/ou au décollage d'un aéronef présentant un système de propulsion, lequel procédé comprend la préparation d'un courant de fluide produit de manière stationnaire par rapport à une surface d'atterrissage ou de décollage (10), pour apporter de l'énergie à l'aéronef, **caractérisé en ce que** la densité du courant de fluide est ajustée en fonction de la situation.

2. Procédé selon la revendication 1, **caractérisé en ce que** la direction du courant de fluide est ajustée en fonction de la situation.

3. Procédé selon la revendication 1, **caractérisé en ce que** la valeur d'au moins un autre paramètre physique du courant de fluide est ajustée en fonction de la situation.

4. Procédé selon la revendication 3, **caractérisé en ce que** le au moins un paramètre physique comprend au moins un des paramètres suivants : la température du courant de fluide, la vitesse du courant de fluide, l'homogénéité du courant de fluide et la proportion de laminarité du courant de fluide.

5. Procédé selon la revendication 1, **caractérisé en ce que** le courant de fluide préparé présente une densité spécifique déterminée et, si nécessaire, est enrichi par au moins un matériau de densité spécifique plus élevée.

6. Procédé selon la revendication 1, **caractérisé en ce que** l'on incorpore un agent d'extinction au courant de fluide préparé.

7. Procédé selon la revendication 1, **caractérisé en ce que** le courant de fluide préparé est un vent produit artificiellement à partir de l'atmosphère présente, un courant matériel ou un courant massique.

8. Procédé selon la revendication 1, **caractérisé en ce que** l'on prépare d'abord, pour l'assistance à l'atterrissage d'un aéronef, un courant de fluide qui est approprié pour freiner l'aéronef et **en ce que** l'on prépare ensuite un courant de fluide qui est approprié pour faire descendre l'aéronef de son état planant sur la surface d'atterrissage (10).

9. Procédé selon la revendication 1, **caractérisé en ce que** l'on prépare d'abord, pour l'assistance au décollage d'un aéronef, un courant de fluide qui est approprié pour faire passer l'aéronef à un état planant à partir de l'aire de décollage (10) et **en ce que** l'on prépare ensuite un courant de fluide qui est approprié pour faire accélérer l'aéronef dans une direction souhaitée.

10. Dispositif d'assistance à l'atterrissage et/ou au décollage d'un aéronef présentant un système de propulsion, comprenant au moins un générateur de courant de fluide (11) stationnaire par rapport à une surface d'atterrissage ou de décollage (10) qui est conçu de manière à préparer un courant de fluide pour l'apport d'énergie à un aéronef, **caractérisé en ce que** le générateur de courant de fluide est en outre conçu de manière à faire varier la densité du courant de fluide préparé.

11. Dispositif selon la revendication 10, **caractérisé en ce que** le courant de fluide préparé par le générateur de courant de fluide (11) est orientable.

12. Dispositif selon la revendication 10, **caractérisé en ce que** le générateur de courant de fluide est conçu de manière à faire varier la valeur d'au moins un autre paramètre physique du courant de fluide préparé.

13. Dispositif selon la revendication 10, **caractérisé par** un élément de chauffage (12) pour chauffer le courant de fluide préparé.

14. Dispositif selon la revendication 10, **caractérisé par** un élément de refroidissement (12) pour refroidir le courant de fluide préparé.

15. Dispositif selon la revendication 10, **caractérisé par** une unité d'acheminement de substance (13) pour acheminer une substance supplémentaire à un courant de fluide préparé, la substance supplémentaire présentant une densité spécifique supérieure à celle du courant de fluide préparé.

16. Dispositif selon la revendication 10, **caractérisé par** une unité d'acheminement d'agent d'extinction (13) pour acheminer un agent d'extinction au courant de fluide préparé.

17. Dispositif selon la revendication 10, **caractérisé en ce que** le au moins un générateur de courant de fluide comprend au moins une soufflante (11).

18. Dispositif selon la revendication 16, **caractérisé en ce que** la au moins une soufflante comprend au moins une soufflante carénée (11).

19. Dispositif selon la revendication 10, **caractérisé en ce que** le au moins un générateur de courant de fluide (11) est conçu de manière à préparer, comme courant de fluide, un vent produit artificiellement à partir de l'atmosphère présente, un courant matériel ou un courant massique.

20. Dispositif selon la revendication 10, **caractérisé par** un dispositif de réglage (14) pour déterminer la valeur optimale d'au moins un paramètre du courant de fluide à préparer par le au moins un générateur de courant de fluide et pour ajuster cette au moins une valeur paramétrique.

21. Dispositif selon la revendication 20, **caractérisé en ce que** le au moins un paramètre comprend au moins un des paramètres suivants : la direction du courant de fluide, la température du courant de fluide, la densité du courant de fluide, la vitesse du courant de fluide, l'homogénéité du courant de fluide et la proportion de laminarité du courant de fluide.
